# EUROPÄISCHE PATENTSCHRIFT

(11) **EP 2 366 590 B1**
(45) Veröffentlichungstag und Bekanntmachung des Hinweises auf die Patenterteilung: **16.10.2013**
(21) Anmeldenummer: 11002138.3
(22) Anmeldetag: 15.03.2011
(51) Int. Cl.: B60R 13/02, F16B 19/10, F16B 5/06

(54) **Befestigungsclip**
Retaining clip
Clip de fixation

(30) Priorität: 18.03.2010 DE 102010011901
(43) Veröffentlichungstag der Anmeldung: 21.09.2011
(73) Patentinhaber: TRW Automotive Electronics & Components GmbH, 78315 Radolfzell (DE)
(72) Erfinder: Demerath, Michael, 66909 Hüffler (DE)
(74) Vertreter: Prinz & Partner

(56) Entgegenhaltungen:
- EP-A2- 0 964 170
- DE-B3- 10 310 652
- US-A- 5 375 954

## Beschreibung

Die Erfindung betrifft einen Befestigungsclip zur Befestigung eine Bauteils an einem Träger, insbesondere eines Verkleidungsteils eines Kraftfahrzeugs an einem Karosserieblech, mit einem Verankerungselement, das in eine Öffnung des Trägers eingesetzt werden kann, und mit einem Verriegelungselement, das mit dem Bauteil zusammenwirken kann, sich durch das Verankerungselement hindurch erstreckt und relativ zu diesem zwischen einer Montagestellung und einer Verriegelungsstellung verschiebbar ist, wobei am Verankerungselement mindestens ein Rastelement angebracht ist, welches das Verriegelungselement in der Verriegelungsstellung halten kann.

Ein solcher Befestigungsclip, der beispielsweise aus der DE 100 64 017 A1, der EP 0 964 170 A2 oder der US 5,375,954 A bekannt ist, kann dazu verwendet werden, ein Verkleidungsteil eines Kraftfahrzeugs lösbar an beispielsweise einem Karosserieblech zu befestigen. Am Verkleidungsteil ist dabei das Verriegelungselement angebracht, das im Verankerungselement vormontiert ist. Das Verankerungselement, das mit Spreizarmen versehen ist, wird mit diesen durch eine Öffnung im Karosserieblech (oder einem anderen Träger) hindurchgesteckt, und das Verriegelungselement wird tiefer in das Verankerungselement hineingedrückt, so dass es aus der Montagestellung in die Verriegelungsstellung gelangt. In dieser sind die Spreizarme gegenüber ihrer Ausgangsstellung auseinandergespreizt, so dass das Verankerungselement nicht mehr aus dem Karosserieblech herausgezogen werden kann.

Um das Verkleidungsteil wieder zu lösen, muss es fest vom Karosserieblech abgezogen werden, so dass das Verriegelungselement aus dem Verankerungselement herausgezogen wird und aus der Verriegelungsstellung in die Montagestellung gelangt. Dadurch sind die Spreizarme wieder freigegeben und kehren aufgrund ihrer Eigenelastizität in die Ausgangsstellung zurück. Das Verankerungselement kann (zusammen mit dem Verriegelungselement) aus der Öffnung des Karosserieblechs herausgezogen werden.

Es hat sich jedoch herausgestellt, dass die Haltekräfte, die zum Herausziehen des Verriegelungselements aus der Verriegelungsstellung in die Montagestellung überwunden werden müssen, bei dem bekannten Befestigungsclip nicht immer ausreichend hoch sind. Insbesondere bei mehrfacher Montage/Demontage kann es zu einer Verringerung der vom Rastelement erzeugten Haltekräfte kommen. Weiterhin ist bei dem bekannten Befestigungsclips nachteilig, dass bei der Herstellung des Verankerungselements eine Spritzgussform mit mehreren Schiebern nötig ist, um das Verankerungselement entformen zu können.

Aufgabe der Erfindung ist es daher, einen Befestigungsclip der eingangs genannten Art dahingehend zu verbessern, dass vom Rastelement höhere Haltekräfte ausgeübt werden können, die das Verriegelungselement in der Verriegelungsstellung halten, ohne dass die Herstellung des Befestigungsclips aufwendiger wird.

Zur Lösung dieser Aufgabe ist bei einem Befestigungsclip der eingangs genannten Art vorgesehen, dass das Rastelement an einem Außenumfang des Verankerungselements angebracht ist und an einer Rastplatte des Verriegelungselements ankreifen kann, und dass das Verankerungselement einen ringförmigen Körper aufweist, durch den sich das Verriegelungselement hindurcherstreckt, und dass das Rastelement am Außenumfang des Körpers angeordnet ist. Durch die Verlagerung des Rastelements weg von der Mittelachse des Befestigungsclips nach außen steht mehr Platz für das Rastelement zur Verfügung, so dass es massiver ausgeführt werden und höhere Haltekräfte aufbringen kann. Auch können mehrere Rastelement vorgesehen werden, da entlang des Umfangs des Verankerungselements mehr Platz zur Verfügung steht. Insgesamt ist die Belastung des einzelnen Rastelements reduziert, so dass auch bei mehrfacher Montage/Demontage die erzeugten Haltekräfte (nahezu) konstant bleiben. Außerdem ist es möglich, eine Spritzgussform zu verwenden, die ohne Schieber auskommt.

Gemäß einer bevorzugten Ausführungsform ist vorgesehen, dass entlang dem Außenumfang des Körpers mehrere Rastelemente gleichmäßig verteilt sind. Dies ermöglicht es, hohe Haltekräfte symmetrisch auf das Verriegelungselement aufzubringen.

Vorzugsweise ist dabei vorgesehen, dass die Rastlaschen entlang dem kreisförmigen Außenumfang des Verankerungselements angeordnet sind. Auf diese Weise ergibt sich eine kompakte Gestaltung.

Gemäß einer bevorzugten Ausführungsform ist vorgesehen, dass das Rastelement bügelförmig mit einem Mittelsteg und zwei Armen ausgeführt ist, wobei der Mittelsteg des Rastelements mit dem Verriegelungselement zusammenwirken kann und die beiden Arme mit dem Verankerungselement verbunden sind. Diese Gestaltung ermöglicht es, ein mechanisch stabiles Rastelement zu verwenden, das hohe Haltekräfte aufbringen kann, während es gleichzeitig ohne Schieber entformt werden kann.

Vorzugsweise ist am Verankerungselement eine Dichtung vorgesehen. Diese dichtet zwischen dem Verriegelungselement und dem Träger ab, so dass durch die Öffnung im Träger kein Wasser oder Schmutz zum Verkleidungsteil gelangen kann.

Dabei ist vorzugsweise vorgesehen, dass die Dichtung innerhalb eines Radius liegt, der von dem Rastelement definiert ist. Auf diese Weise wird eventuell durch die Öffnung im Träger hindurchdringendes Wasser in einem Bereich abgefangen, in dem es keine weiteren Öffnungen gibt. Die Rastelemente liegen außerhalb des Bereichs, in dem sich Wasser befinden kann, so dass im äußeren Bereich, in dem die Verrastung erfolgt, nicht mehr auf Dichtigkeit geachtet werden muss. Auch dies ermöglicht es, die Rastelement in einem Spritzgusswerkzeug ohne zusätzliche Schieber herzustellen.

Gemäß einer bevorzugten Ausführungsform ist vorgesehen, dass die Dichtung aus zwei Teilelementen besteht, die auf der einen und der anderen Seite des Abschnittes des Verankerungselements liegt, an dem das Rastelement angebracht ist.

Vorzugsweise ist vorgesehen, dass das Verankerungselement mit mehreren Spreizarmen versehen ist, die von dem Verriegelungselement nach außen gespreizt werden, wenn sich dieses in der Verriegelungsstellung befindet. Die Spreizarme ermöglichen eine besonders zuverlässige Verankerung am Träger.

Gemäß einer Ausführungsform, die im Hinblick auf die Verhinderung von Montagefehlern vorteilhaft ist, ist vorgesehen, dass das Verriegelungselement mit mehreren Führungsrippen versehen ist, die sich mindestens so weit nach außen erstrecken wie die Spreizarme, wenn diese sich in der Ausgangsstellung befinden. Diese Ausgestaltung beruht auf der Erkenntnis, dass einer der Gründe für Montagefehler des Befestigungsclips darin liegt, dass die Spreizarme beim Versuch, sie durch die Öffnung im Träger hindurchzustecken, am Rand der Öffnung hängenbleiben und dadurch verbogen werden. Dies kann dadurch verhindert werden, dass die Führungsrippen aufgrund ihrer Dimensionierung nun als Abweiser wirken. Auf diese Weise wird beim Einsetzen des Verankerungselement in die Öffnung des Trägers gewährleistet, dass der Rand der Öffnung die Spreizarme nicht verbiegen kann

Erfindungsgemäß ist auch ein Spitzgusswerkzeug zur Herstellung eines Verankerungselements für einen Befestigungsclip der beschriebenen Art vorgesehen, wobei das Spritzgusswerkzeug dadurch gekennzeichnet ist, dass es keinen Schieber aufweist. Dies ermöglicht eine kostengünstige Herstellung des Befestigungsclips, da ein schieberloses Spritzgusswerkzeug wesentlich günstiger hergestellt werden kann als ein Spritzgusswerkzeug mit Schiebern.

Die Erfindung wird nachfolgend anhand einer Ausführungsform beschrieben, die in den beigefügten Zeichnungen dargestellt ist. In diesen zeigt:
- Figur 1 in einer perspektivischen Ansicht einen Befestigungsclip im Ausgangszustand;
- Figur 2 in einer Schnittansicht den Befestigungsclip von Figur 1 montiert an einem Verkleidungsteil;
- Figur 3 in einer perspektivischen Ansicht den Befestigungsclip mit dem Verriegelungselement in der Verriegelungsstellung;
- Figur 4 in einer Schnittansicht den Befestigungsclip von Figur 3 angebracht an einem Träger; und
- Figur 5 in einer Schnittansicht das Verankerungselement des Befestigungsclips in einem Spritzgusswerkzeug.

Der Befestigungsclip weist drei Bauteile auf, nämlich ein Verankerungselement 2, eine Dichtung 4 sowie ein Verriegelungselement 6.

Das Verankerungselement 2 weist einen scheiben- oder ringförmigen Körper 10 auf, der eine Mittelöffnung mit einer Mittelachse M aufweist. Ausgehend vom Rand der Mittelöffnung erstrecken sich konzentrisch zur Mittelachse M vier Spreizarme 12, deren Außenflächen zusammen eine Kreiskontur definieren. Das freie, vom Körper 10 abgewandte Ende der Spreizarme 12 verläuft dabei schräg nach innen, so dass sich der Durchmesser der definierten Kreiskontur am vom Körper 10 abgewandten Ende verringert.

Am Außenumfang des Körpers 10 des Verankerungselementes 2 sind sechs Rastlaschen 14 angeordnet, die bügel- oder U-förmig ausgeführt sind, also einem Mittelsteg 15 und zwei Arme 16 aufweisen. Der Mittelsteg 16 jeder Rastlasche 14 ist auf der zur Mittelachse M weisenden Seite mit einer Rastrippe versehen.

Das Verankerungselement 2 besteht aus Kunststoff, der eine ausreichende Elastizität hat, um ein elastisches Auslenken der Spreizarme 12 und der Rastlaschen 14 zu ermöglichen.

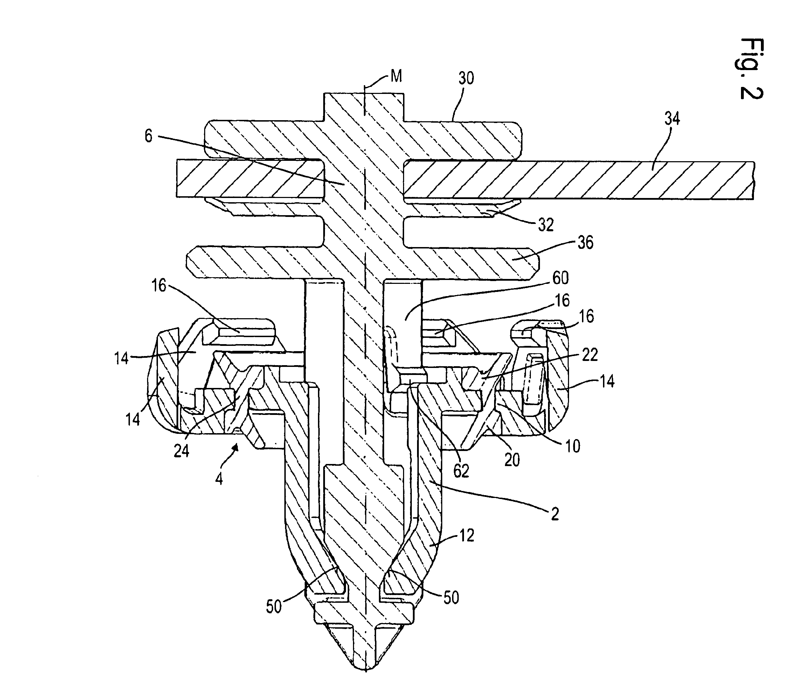

Die Dichtung 4 besteht aus zwei allgemein ringförmigen Teilelementen 20, 22, die auf der einen und der anderen Seite des Körpers 10 des Verankerungselementes 2 angeordnet sind. Die beiden Teilelemente sind durch mehrere Verbindungsabschnitte 24 (siehe Figur 2) miteinander verbunden, die sich durch Öffnungen im Körper 10 des Verankerungselementes 2 hindurch erstrecken. Jedes Teilelement ist mit einer Dichtlippe 23 versehen. Die Dichtung 4 besteht beispielsweise aus TPE und ist an das Verankerungselement 2 angespritzt, so dass sie dort unverlierbar gehalten ist.

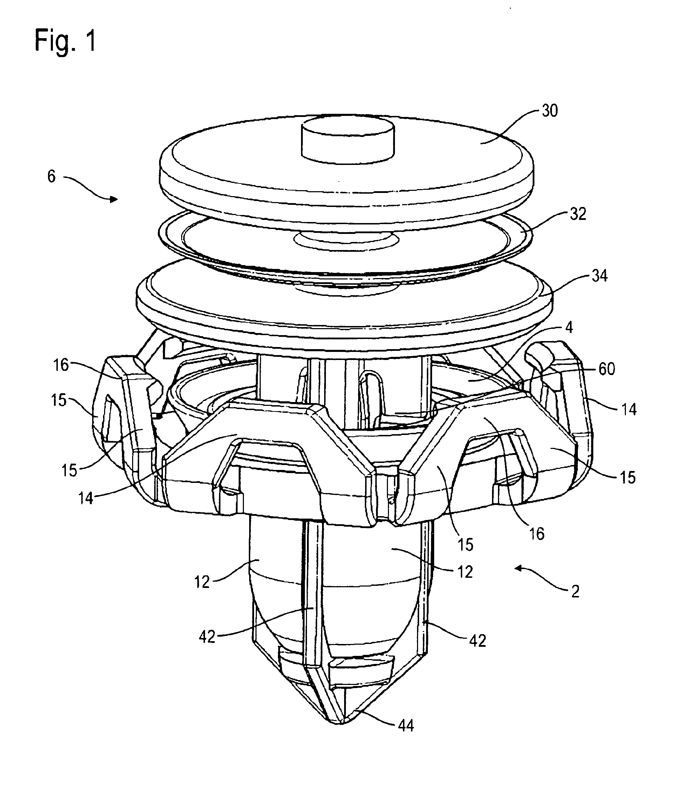

Das Verriegelungselement 6 ist allgemein bolzen- oder stiftförmig ausgeführt und weist einen Kopfabschnitt auf, der gebildet ist durch zwei einander gegenüberliegende Halteplatten 30, 32, zwischen denen ein Verkleidungsteil 34 aufgenommen werden kann, und eine Rastplatte 36. Ausgehend von der Rastplatte 36 erstreckt sich ein Spreizabschnitt 40, der gebildet ist durch vier im Winkel von 90° zueinander angeordnete Führungsrippen 42, die entlang einer Mittelachse des Spreizabschnitts 40 ineinander übergehen. Wie insbesondere in Figur 1 zu sehen ist, sind die Führungsrippen 42 so dimensioniert, dass sie bündig mit der Außenkontur der Spreizarme 12 abschließen oder sogar über diese hinausstehen.

Das vordere Ende des Spreizabschnittes 40 ist abgeschrägt, so dass eine Zentrierspitze 44 gebildet ist. Im Bereich der Zentrierspitze 44 ist zwischen zwei benachbarten Führungsrippen 42 jeweils eine Anschlagrippe 46 angeordnet, die sich in einer Ebene senkrecht zur Mittelachse des Spreizabschnittes 40 erstreckt. Die Anschlagrippen dienen dazu, bei der Demontage das Verankerungselement mitzunehmen.

In geringem Abstand hinter den Anschlagrippen 46 ist zwischen benachbarten Führungsrippen 42 jeweils ein Spreizvorsprung angeordnet, der aus einer Schräge 50 und einem Zylindersektor 52 besteht.

In der Nähe der Rastplatte 36 ist der Spreizabschnitt 40 des Verriegelungselementes 6 mit zwei Rastelementen 60 versehen, die einander bezüglich der Mittel- oder Längsachse des Spreizabschnittes 40 diametral gegenüberliegen. Jedes Rastelement 60 ist als Arm ausgeführt, der sich entlang der Längsachse des Spreizabschnittes 40 erstreckt und an seinem freien Ende eine Abstützschräge 62 aufweist. Die Außenkontur der Rastelemente 60 entspricht derjenigen der Führungsrippen 42, so dass sie angesehen werden können als in einer Aussparung der Führungsrippen angeordnet oder durch einen L-förmigen Ausschnitt in den Führungsrippen 42 gebildet.

Auch das Verriegelungselement 6 besteht aus Kunststoff, der eine ausreichende Eigenelastizität aufweist, um ein elastisches Biegen der armförmigen Rastelemente 60 zu ermöglichen.

In einem Ausgangs- oder Montagezustand des Befestigungsclips (siehe die Figuren 1 und 2) ist das Verriegelungselement 6 so in das Verankerungselement 2 eingesetzt, dass sich der Spreizabschnitt 40 des Verriegelungselementes 6 durch den von der Öffnung im Körper 10 und die Spreizarme 12 definierten Kanal hindurch erstreckt, bis die Zentrierspitze 44 vor dem freien Ende der Spreizarme 12 liegt.

Die freien Enden der Spreizarme 12 liegen dabei hinter den Anschlagrippen 46 und vor den Schrägen 50 der Spreizvorsprünge. Gleichzeitig liegen die Abstützschrägen 62 der Rastelemente 60 am Körper 10 des Verankerungselementes 2, an und zwar im Bereich des Randes der Öffnung. Wie in Figur 2 zu sehen ist, ist zwischen den beiden Halteplatten 30, 32 des Verriegelungselementes 6 das Verkleidungsteil 34 aufgenommen. Das Verkleidungsteil 34 kann mit dem daran montierten Befestigungsclip zur Endmontage angeliefert werden.

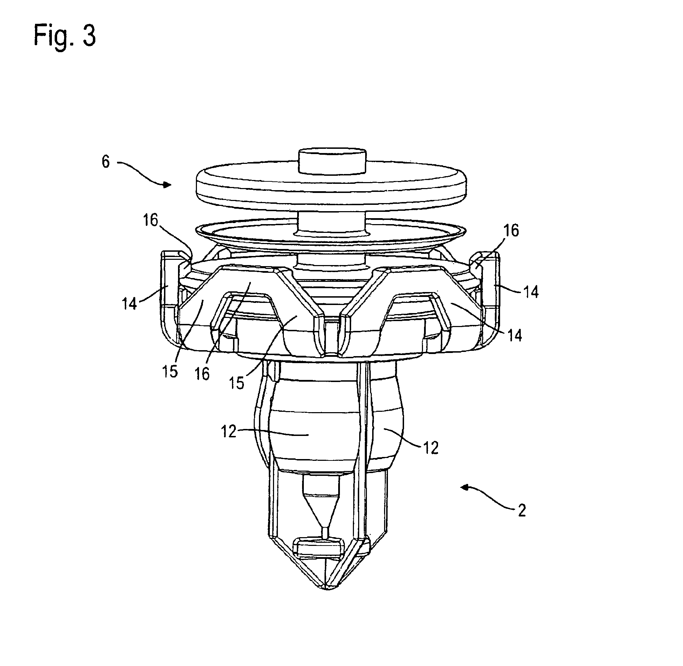

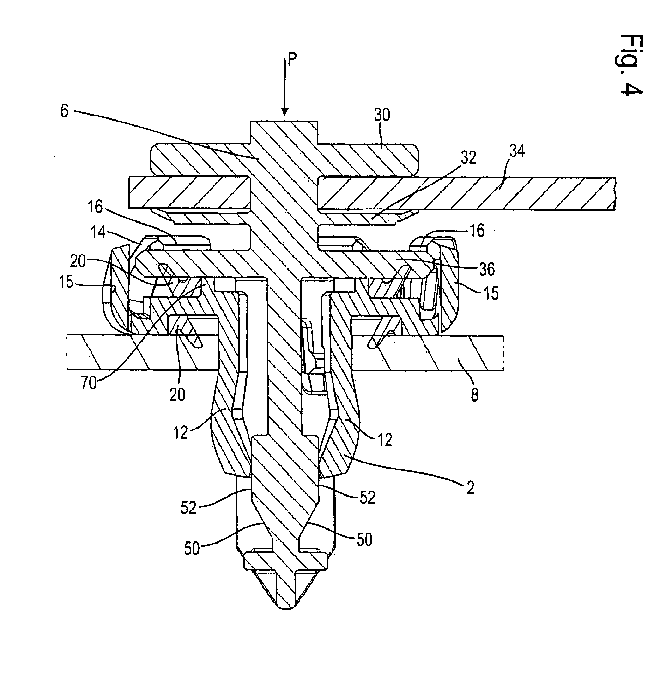

Zur Montage des Verkleidungsteils 34 an einem Träger 8 (siehe Figur 4), der beispielsweise ein Karosserieteil eines Kraftfahrzeugs sein kann, werden die Spreizarme 12 des Verankerungselementes 2 des Befestigungsclips durch eine Öffnung im Träger 8 hindurch gesteckt, bis der Körper 10 am Träger 8 anliegt. Dies gewährleistet, dass auch die Dichtlippe des Teilelements 20 der Dichtung 4 am Träger 8 anliegt. Da die Dichtung in einer Vertiefung am Körper 10 angeordnet ist, ist gewährleistet, dass die Dichtung 4 nicht übermäßig zusammengedrückt werden kann, sondern unter einer definierten Vorspannung am Träger 8 anliegt. Durch Druck auf das Verriegelungselement 6 wird dieses tiefer in das Verankerungselement 2 hineingedrückt. Hierfür muss jedoch zunächst die Widerstandskraft überwunden werden, die von den beiden Rastelementen 60 erzeugt wird. Sobald diese Widerstandskraft überwunden ist, kann das Verriegelungselement 6 in der Richtung des Pfeils P von Figur 4 aus der Montagestellung in die Verriegelungsstellung (siehe die Figuren 3 und 4) überführt werden, in der die Spreizarme 12 nach außen gespreizt sind, da sie über die Schräge 50 auf den jeweiligen Zylindersektor 52 gleiten. In dieser nach außen gespreizten Stellung ist das Verankerungselement zuverlässig in der Öffnung im Träger 8 verankert. Da außerdem die Rastplatte 36 hinter den Rastrippen des Mittelstegs 16 der Rastlaschen 14 einrastet, ist auch gewährleistet, dass das Verkleidungsteil 34 zuverlässig am Träger 8 befestigt ist. In der Verriegelungsstellung des Verriegelungselementes liegt die Rastplatte 36 an der Dichtlippe des zweiten Teilelements 22 der Dichtung 4 ab, wobei auch hier durch einen Materialvorsprung 70 am Körper 10 gewährleistet ist, dass die Dichtung 4 nicht übermäßig stark zusammengedrückt werden kann.

Zum Lösen des Verkleidungsteils 34 vom Träger 8 muss das Verriegelungselement 6 wieder in die Montagestellung überführt werden, wozu eine solche Zugkraft ausgeübt werden muss, dass die von den Rastlaschen 14 auf die Rastplatte 36 ausgeübte Haltekraft überwunden und die Rastplatte 36 freigegeben wird. Dadurch kann das Verriegelungselement 6 wieder in die Montagestellung zurückgezogen werden. Sobald dabei die Spreizvorsprünge ausreichend weit in den Innenraum zwischen den Spreizarmen 12 zurückgezogen sind, federn die Spreizarme 12 elastisch in ihre Ausgangsstellung zurück, in der das Verankerungselement 2 durch Zusammenwirken der Anschlagrippen 46 mit den Spreizarmen 12 aus der Öffnung des Trägers 8 herausgezogen werden kann.

Der besondere Vorteil des beschriebenen Befestigungsclips liegt darin, dass aufgrund der außenliegenden Anordnung der Rastelemente 14 diese mit der gewünschten Dimensionierung ausgeführt werden können. Außerdem steht genügend Platz zur Verfügung, um die gewünschte Anzahl von Rastelementen anordnen zu können. Daher können die Rastelemente 14 insgesamt eine hohe Haltekraft auf die Rastplatte 36 ausüben. Aufgrund der Anordnung der Dichtung 4 innerhalb der Rastelemente 14 kann die Dichtung zwischen dem Träger und der Rastplatte abdichten, so dass kein Wasser in den Bereich der Rastelemente gelangen kann.

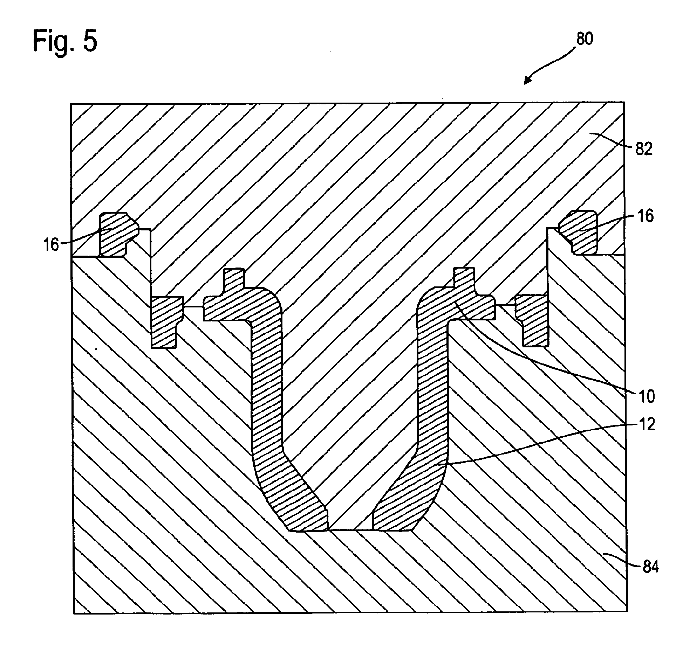

Wie in Figur 5 zu sehen ist, kann das Verankerungselement 2 mittels eines Spritzgusswerkzeugs 80 herstellt werden, das ein Oberteil 82 und ein Unterteil 84 aufweist, jedoch keine Schieber benötigt.

## Patentansprüche

1. Befestigungsclip zur Befestigung eine Bauteils (34) an einem Träger (8), insbesondere eines Verkleidungsteils (34) eines Kraftfahrzeugs an einem Karosserieblech (8), mit einem Verankerungselement (2), das in eine Öffnung des Trägers (8) eingesetzt werden kann, und mit einem Verriegelungselement (6), das mit dem Bauteil (34) zusammenwirken kann, sich durch das Verankerungselement (2) hindurch erstreckt und relativ zu diesem zwischen einer Montagestellung und einer Verriegelungsstellung verschiebbar ist, wobei am Verankerungselement (2) mindestens ein Rastelement (14) angebracht ist, welches das Verriegelungselement (6) in der Verriegelungsstellung halten kann, **dadurch gekennzeichnet, dass** das Rastelement (14) an einem Außenumfang des Verankerungselements angebracht ist und an einer Rastplatte (36) des Verriegelungselements (6) angreifen kann, und dass das Verankerungselement (2) einen ringförmigen Körper (10) aufweist, durch den sich das Verriegelungselement (6) hindurcherstreckt, und dass das Rastelement (14) am Außenumfang des Körpers (10) angeordnet ist.

2. Befestigungsclip nach Anspruch 1, **dadurch gekennzeichnet, dass** entlang dem Außenumfang des Körpers (10) mehrere Rastelemente (14) gleichmäßig verteilt sind.

3. Befestigungsclip nach Anspruch 1, **dadurch gekennzeichnet, dass** der Außenumfang des Körpers (10) kreisförmig ist.

4. Befestigungsclip nach einem der vorhergehenden Ansprüche, **dadurch gekennzeichnet, dass** das Rastelement (14) bügelförmig mit einem Mittelsteg (16) und zwei Armen (15) ausgeführt ist, wobei der Mittelsteg des Rastelements (14) mit dem Verriegelungselement (6) zusammenwirken kann und die beiden Arme mit dem Verankerungselement (2) verbunden sind.

5. Befestigungsclip nach einem der vorhergehenden Ansprüche, **dadurch gekennzeichnet, dass** am Verankerungselement (2) eine Dichtung (4) vorgesehen ist.

6. Befestigungsclip nach Anspruch 5, **dadurch gekennzeichnet, dass** die Dichtung (4) innerhalb eines Radius liegt, der von dem Rastelement (14) definiert ist.

7. Befestigungsclip nach Anspruch 5 oder Anspruch 6, **dadurch gekennzeichnet, dass** die Dichtung (4) aus zwei Teilelementen (20, 22) besteht, die auf der einen und der anderen Seite des Abschnittes des Verankerungselements (2) liegt, an dem das Rastelement (14) angebracht ist.

8. Befestigungsclip nach einem der vorhergehenden Ansprüche, **dadurch gekennzeichnet, dass** das Verankerungselement (2) mit mehreren Spreizarmen (12) versehen ist, die von dem Verriegelungselement (6) nach außen gespreizt werden, wenn sich dieses in der Verriegelungsstellung befindet.

9. Befestigungsclip nach Anspruch 8, **dadurch gekennzeichnet, dass** das Verriegelungselement (6) mit mehreren Führungsrippen (42) versehen ist, die sich mindestens so weit nach außen erstrecken wie die Spreizarme (12), wenn diese sich in der Ausgangsstellung befinden.

## Claims

1. A fastening clip for fastening a component (34) to a carrier (8), in particular a lining part (34) of a motor vehicle to a vehicle body sheet (8), comprising an anchoring member (2) that is adapted to be inserted into an opening of the carrier (8), and a locking member (6) that is adapted to cooperate with the component (34) and extends through the anchoring member (2) and is adapted to be shifted relative thereto between a mounting position and a locking position, the anchoring member (2) having at least one detent member (14) fitted thereto which can hold the locking member (6) in the locking position, **characterized in that** the detent member (14) is fitted on an outer circumference of the anchoring member and can engage a detent plate (36) of the locking member (6), and **in that** the anchoring member (2) includes an annular body (10) through which the locking member (6) extends, and **in that** the detent member (14) is arranged on the outer circumference of the body (10).

2. The fastening clip according to claim 1, **characterized in that** a plurality of detent members (14) is evenly distributed along the outer circumference of the body (10).

3. The fastening clip according to claim 1, **characterized in that** the outer circumference of the body (10) is circular.

4. The fastening clip according to any of the preceding claims, **characterized in that** the detent member (14) is made to be stirrup-shaped with a middle web (16) and two arms (15), the middle web of the detent member (14) being adapted to cooperate with the locking member (6) and the two arms being connected with the anchoring member (2).

5. The fastening clip according to any of the preceding claims, **characterized in that** a seal (4) is provided on the anchoring member (2).

6. The fastening clip according to claim 5, **characterized in that** the seal (4) is located within a radius defined by the detent member (14).

7. The fastening clip according to claim 5 or claim 6, **characterized in that** the seal (4) is comprised of two partial members (20, 22) arranged on either side of that section of the anchoring member (2) to which the detent member (14) is fitted.

8. The fastening clip according to any of the preceding claims, **characterized in that** the anchoring member (2) is provided with a plurality of expansion arms (12) which are spread outward by the locking member (6) when the latter is in the locking position.

9. The fastening clip according to claim 8, **characterized in that** the locking member (6) is provided with a plurality of guide ribs (42) which extend outward at least as far as the expansion arms (12) when the latter are in the initial position.

## Revendications

1. Clip de fixation pour fixer un élément structurel (34) sur un support (8), en particulier un élément d'habillage (34) d'un véhicule automobile sur une tôle de carrosserie (8), comprenant un élément d'ancrage (2) apte à être inséré dans une ouverture du support (8), et comprenant un élément de verrouillage (6) apte à coopérer avec l'élément structurel (34), s'étendant à travers l'élément d'ancrage (2) et étant mobile en translation par rapport à celui-ci entre une position de montage et une position de verrouillage, au moins un élément d'enclenchement (14) étant agencé sur l'élément d'ancrage (2), qui est capable de retenir l'élément de verrouillage (16) dans la position verrouillée, **caractérisé en ce que** l'élément d'enclenchement (14) est agencé sur une périphérie extérieure de l'élément d'ancrage et peut venir attaquer sur une plaque d'enclenchement (36) de l'élément de verrouillage (6), et **en ce que** l'élément d'ancrage (2) comprend un corps annulaire (10) traversé par l'élément de verrouillage (6), et **en ce que** l'élément d'enclenchement (14) est agencé sur la périphérie extérieure du corps (10).

2. Clip de fixation selon la revendication 1, **caractérisé en ce que** plusieurs éléments d'enclenchement (14) sont répartis régulièrement le long de la périphérie extérieure du corps (10).

3. Clip de fixation selon la revendication 1, **caractérisé en ce que** la périphérie extérieure du corps (10) est de forme circulaire.

4. Clip de fixation selon l'une des revendications précédentes, **caractérisé en ce que** l'élément d'enclenchement (14) est réalisé en forme d'étrier comportant une âme centrale (16) et deux bras (15), l'âme centrale de l'élément d'enclenchement (14) pouvant coopérer avec l'élément de verrouillage (6) et les deux bras étant reliés à l'élément d'ancrage (2).

5. Clip de fixation selon l'une des revendications précédentes, **caractérisé en ce qu'**un joint d'étanchéité (4) est prévu sur l'élément d'ancrage (2).

6. Clip de fixation selon la revendication 5, **caractérisé en ce que** le joint d'étanchéité (4) se trouve à l'intérieur d'un rayon défini par l'élément d'enclenchement (14).

7. Clip de fixation selon la revendication 5 ou la revendication 6, **caractérisé en ce que** le joint d'étanchéité (4) est constitué par deux éléments partiels (20, 22) se trouvant sur un côté et sur l'autre du tronçon de l'élément d'ancrage (2) sur lequel est agencé l'élément d'enclenchement (14).

8. Clip de fixation selon l'une des revendications précédentes, **caractérisé en ce que** l'élément d'ancrage (2) est pourvu de plusieurs bras d'écartement (12) qui sont écartés depuis l'élément de verrouillage (6) vers l'extérieur lorsque celui-ci se trouve dans la position de verrouillage.

9. Clip de fixation selon la revendication 8, **caractérisé en ce que** l'élément de verrouillage (6) est pourvu de plusieurs nervures de guidage (42) qui s'étendent au moins aussi loin vers l'extérieur que les bras d'écartement (12), lorsque ceux-ci se trouvent dans la position de départ.
